# FASCICULE DE BREVET EUROPEEN

(11) **EP 2 283 722 B1**
(45) Date de publication et mention de la délivrance du brevet: **23.01.2013**
(21) Numéro de dépôt: 10169687.0
(22) Date de dépôt: 15.07.2010
(51) Int. Cl.: A01J 25/11, A01J 25/12, A01J 25/13, A01J 25/15, A01J 25/16

(54) **Installation agroalimentaire notamment dans la fabrication du fromage**
Lebensmittelherstellungsanlage, insbesondere für die Herstellung von Käse
Food processing installation, in particular in the production of cheese

(30) Priorité: 24.07.2009 FR 0955183
(43) Date de publication de la demande: 16.02.2011
(73) Titulaire: SAS EVOLI, 25770 Serre les Sapins (FR)
(72) Inventeur: Gaillard, Pascal, 25000 Besançon (FR)
(74) Mandataire: Brungard, Yves Francois

(56) Documents cités:
- WO-A1-92/20217
- DE-A1- 1 582 944
- FR-A- 1 460 510
- FR-A1- 2 211 178
- US-B1- 7 437 991

## Description

La présente invention concerne une installation dans le domaine de l'agroalimentaire, notamment pour la fabrication du fromage.

Il est connu de fabriquer du fromage à partir d'une installation comportant :
- un poste de formation d'un caillé à partir de lait et de présure, à transférer avec le sérum ainsi généré, vers
- un poste de moulage dans lequel le caillé est disposé dans un moule dont les parois sont perforées, pour être séparé du sérum, afin de former un pain de caillé,
- un poste de transfert du pain de caillé du poste de moulage vers
- un poste de pressage dans lequel sont entreposés les moules de caillé,
- un poste d'affinage pendant une période et une température prédéterminées, voir par exemple WO 92/20217.

A titre d'exemple illustratif, pour 5000 litres de lait, on ajoute 10 litres de présure et d'eau, générant la formation de caillé (solide) et de sérum (liquide). Le caillé ainsi formé constitue un bloc qu'il faut ensuite casser pour le réduire en grain.

C'est ce mélange caillé-sérum qui sera transféré vers le poste de moulage, où il décantera naturellement pour évacuer le maximum de sérum, dans un temps d'environ 20 minutes.

Le pain de caillé est ensuite dirigé vers le poste de pressage afin d'évacuer le maximum de sérum subsistant dans le pain, pendant environ 6 heures.

Le fromage non affiné ainsi obtenu est dirigé, comme cité ci-dessus, vers un poste d'affinage, en fait une cave ou une chambre tempérée à environ 12° constant pendant 16, 19 ou 24 heures.

Des installations de ce type sont connues, dans lesquelles le poste de moulage est constitué par un système de chaînes à taquets, entrainant les moules, après formation du pain de caillé, vers le poste de pressage.

L'inconvénient de ce type de transfert réside dans le fait que les chaines, ou encore rouleaux de transfert sont arrosés par le sérum au cours de la décantation, ce qui provoque la salissure des pièces mécaniques, et accroit la difficulté à les nettoyer.

Le but de la présente invention est d'éviter à toutes les pièces mécaniques en présence tout contact avec le sérum, et de rendre toutes les pièces accessibles facilement par une solution de nettoyage.

La présente invention permet d'atteindre ce but et concerne à cet effet une installation dans le domaine de l'agroalimentaire, notamment pour la fabrication du fromage, comportant :
- un poste de formation d'un caillé à partir de lait et de présure, à transférer avec le sérum ainsi généré, vers
- un poste de moulage dans lequel le caillé est disposé dans un moule dont les parois sont perforées, pour être séparé du sérum, afin de former un pain de caillé,
- un poste de transfert du pain de caillé du poste de moulage vers
- un poste de pressage dans lequel sont entreposés les moules de caillé, pour être soumis individuellement à la pression d'un plateau, associé à un vérin commandé en descente selon une vitesse prédéterminée, pour évacuer le sérum subsistant dans le caillé et obtenir un fromage non affiné,
- un poste d'affinage pendant une période et une température prédéterminées (non représenté),
**caractérisée en ce que** le poste de moulage est constitué par une structure métallique dans laquelle sont disposés une pluralité de moules dont les parois sont perforées, surmontés de rehausse alimentées à leur partie supérieure du mélange caillé-sérum, issu du poste de formation de celui-ci, par l'intermédiaire d'un circuit d'alimentation et de distribution dans chacune des rehausses, ladite structure étant statique pendant la phase de décantation du caillé, et animée en rotation ensuite, à la manière d'un carrousel, après désolidarisation des rehausses des moules associés, pour diriger ces derniers, pas à pas, vers le poste de transfert, puis de pressage.

Avec un tel poste de moulage rotatif, l'opérateur n'a plus à se déplacer, les moules viendront à lui.

Egalement la réduction des pièces mécaniques en mouvement réduira le coût de maintenance de manière notable, le système rotatif ne comportant qu'un seul moto réducteur d'entrainement et un axe de centrage.

Egalement est ainsi obtenue une diminution des zones salissables, donc une réduction des opérations de nettoyage, faisant gagner en volume d'eau, énergie de chauffage de la solution de nettoyage et le temps de nettoyage proprement dit.

L'installation prévoit également une évacuation du sérum directement dans un bac situé à la partie inférieure du carrousel, constituant le poste de moulage, sans tuyauteries ni vannes, ce qui représente un avantage important du système.

A noter également qu'au niveau du moule et de sa rehausse, sont éliminées les zones où les grains de caillé risquent de s'accumuler, de s'agglomérer ou de se coller à la paroi.

Est également recherchée une facilité de nettoyage totale, en particulier à l'intérieur de la rehausse.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente en perspective une installation pour la fabrication du fromage selon l'invention, montrant tous les postes de fabrication.

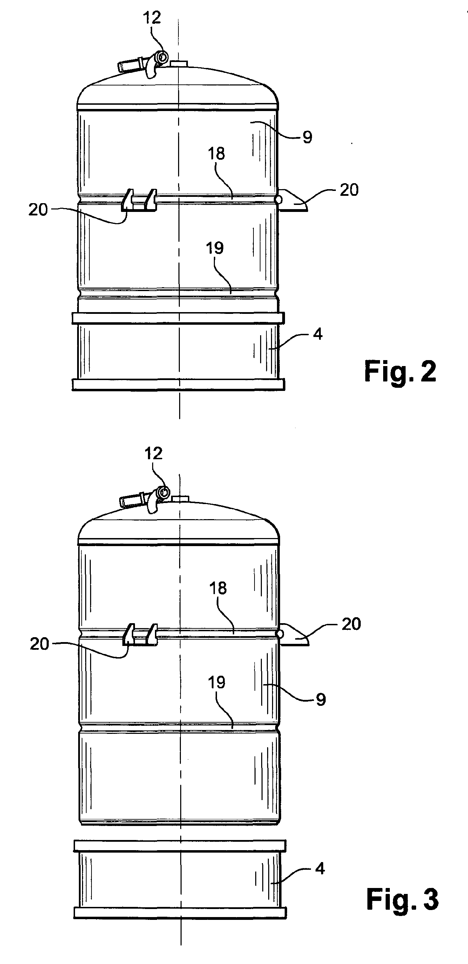

La figure 2 est une vue en plan d'un moule et de sa rehausse, selon l'invention, après assemblage.
La figure 3 est une vue en plan d'un moule et de sa rehausse, selon l'invention, avant assemblage.
La figure 4 est une vue en coupe axiale de la rehausse selon la figure 3.
La figure 5 est une vue en perspective de la rehausse selon la figure 4, montrant les moyens de décantation associés, selon l'invention.
La figure 6 est une vue en coupe axiale de la rehausse selon les figures 2 et 3, montrant des moyens de nettoyage interne et externe de la rehausse.
La figure 7 est une vue en perspective d'un poste de moulage.
La figure 8 est une vue de détail à échelle agrandie selon la figure 7, montrant plus particulièrement les moyens de répartition du mélange caillé-sérum aux rehausses du poste de moulage.
La figure 9 est une vue de détail à échelle agrandie selon la figure 7, montrant plus particulièrement le circuit de rinçage des rehausses, ainsi que leurs bras supports et de guidage.
La figure 10 est une vue de détail à échelle agrandie selon la figure 7, montrant plus particulièrement le bac de récupération du sérum lors du moulage.
La figure 11 est une vue de détail à échelle agrandie selon la figure 7, montrant plus particulièrement le système de suspension de la structure porteuse mobile en translation ascendante ou descendante par rapport au bâti fixe.
La figure 12 est une vue de détail à échelle agrandie selon la figure 7, montrant plus particulièrement, en vue de dessous, les moyens d'entrainement en rotation motorisé du plateau rotatif de récupération du sérum.
La figure 13 représente en perspective un poste de pressage en cours de montage, ayant déjà reçu une première colonne étagée de moules.
La figure 14 est une vue en coupe à échelle agrandie des moyens de centrage et de maintien d'un mât central de la structure de pressage, située à sa partie inférieure.

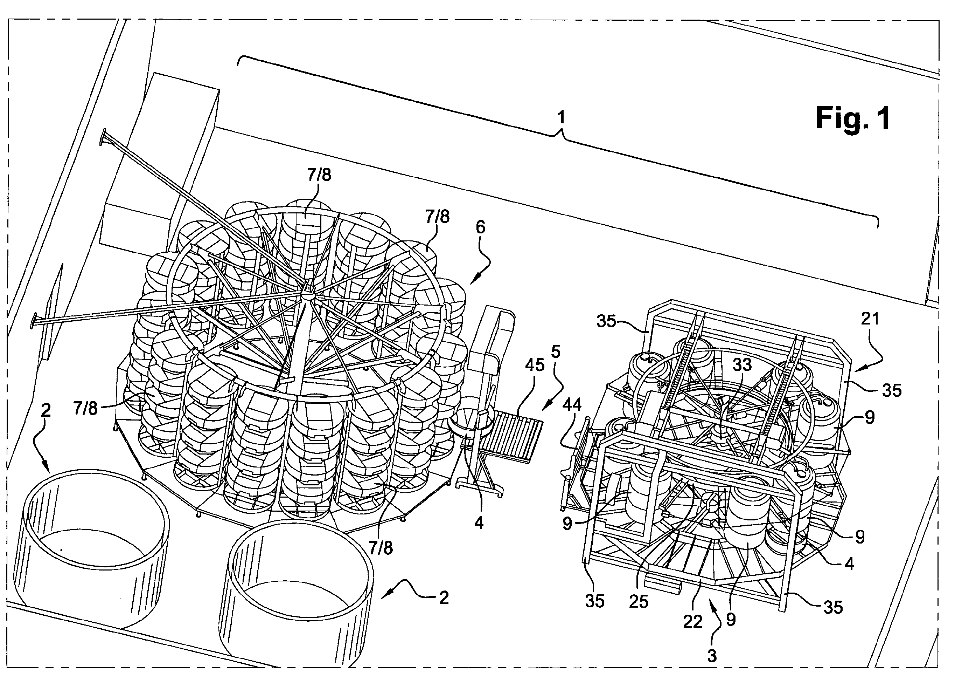

Les figures 1 5 , 1 6 , 1 7, 18 représentent en perspective tous les postes d'élaboration du fromage, respectivement : à la fin du moulage ; pendant le transfert vers le poste de pressage ; lors de la mise en place dans le poste de pressage ; lors de l'ouverture du poste de transfert.

L'installation 1 globalement désignée sur la figure 1 est notamment destinée à la fabrication du fromage.

De manière connue, elle comporte :
- un poste de formation 2 d'un caillé à partir de lait et de présure, à transférer avec le sérum ainsi généré, vers
- un poste de moulage 3 dans lequel le caillé est disposé dans un moule 4 dont les parois sont perforées, pour être séparé du sérum, afin de former un pain de caillé,
- un poste de transfert 5 du pain de caillé du poste de moulage 3 vers
- un poste de pressage 6 dans lequel sont entreposés les moules de caillé 4, pour être soumis individuellement à la pression d'un plateau 7, associé à un vérin 8 commandé en descente selon une vitesse prédéterminée, pour évacuer le sérum subsistant dans le caillé et obtenir un fromage non affiné,
- un poste d'affinage pendant une période et une température prédéterminées (non représenté).

Selon l'invention, le poste de moulage 3 est constitué par une structure métallique dans laquelle sont disposés une pluralité de moules 4 dont les parois sont perforées, surmontés de rehausse 9 alimentées à leur partie supérieure du mélange caillé-sérum, issu du poste de formation 2 de celui-ci, par l'intermédiaire d'un circuit 10 d'alimentation et de distribution dans chacune des rehausses 9, ladite structure étant statique pendant la phase de décantation du caillé, et animée en rotation ensuite, à la manière d'un carrousel, après désolidarisation des rehausses 9 des moules 4 associés, pour diriger ces derniers, pas à pas, vers le poste de transfert 5, puis de pressage 6.

Il est important de noter que la partie supérieure des rehausses 9 des moules 4, recevant le mélange caillé-sérum, forme une collerette périphérique 11 dans laquelle a été ménagé un premier orifice 12 d'alimentation du mélange arrivant sous pression depuis le poste de formation 2, pour être projeté tangentiellement contre la paroi interne de la collerette 11, afin de lui impliquer un mouvement circulaire en direction d'une grille de filtration 13 doublant partiellement la collerette 11, et délimitant avec celle-ci un espace 14 destiné à pré-décanter le caillé en recueillant le sérum du côté interne du filtre 13, dans cet espace 14 pourvu d'un orifice d'évacuation 15, le caillé arrêté du côté externe du filtre 13 tombant par gravité dans le moule 4 dont les parois sont perforées, situé à la base de la rehausse 9.

Le mouvement circulaire ainsi obtenu a pour avantage d'offrir une bonne répartition du caillé dans le moule et l'obtention d'un dôme favorable au pressage à venir.

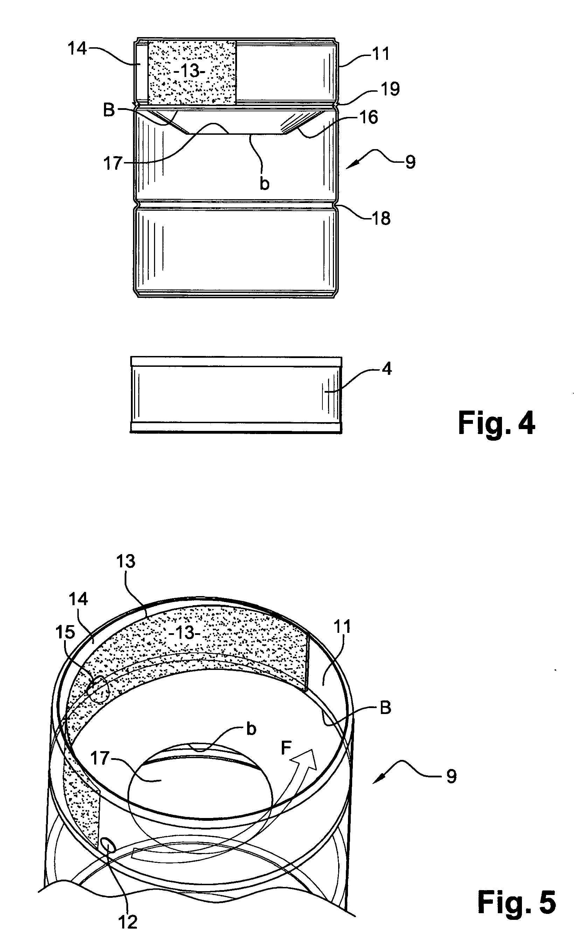

Comme on peut le voir sur la figure 5, ce mouvement est donné selon la flèche « F » selon la présente réalisation.

La décantation du caillé-sérum va se poursuivre dans le moule 4 pendant un temps prédéterminé, en général une vingtaine de minutes.

En fait, il faut savoir que le « grain » de caillé doit baigner dans la totalité du sérum en début de moulage. C'est pourquoi la rehausse 9 est conçue pour que le sérum soit conservé en totalité en début de moulage, d'où l'importance de la position de la grille 13.

Il est à noter également que le diamètre du tube d'arrivée définira la vitesse de rotation du mélange, selon le sens « F ». Ceci permet que le mélange caillé-sérum arrive en pluie dans le moule et que les grains s'y déposent doucement, car on cherche à obtenir une répartition homogène de ces grains dans le pain de caillé.

L'arrivée en pluie et en rotation lente a précisément pour résultat cette répartition finale en forme de dôme, et une bonne homogénéité de la répartition des grains, quelle que soit leur taille.

Selon une autre caractéristique associée à la rehausse, la collerette périphérique 11 et sa grille 13 de filtration sont associées à un tronc de cône 16 dont la grande base « B » se confond avec la collerette 11, et dont la paroi tronconique recueille le caillé pour le diriger vers une ouverture centrale 17 constituant la petite base « b » du cône 16, pour assurer sa concentration et son déversement au centre du moule 4, de manière à obtenir une bonne répartition et la formation d'un pain de caillé en dôme.

Par ailleurs, la rehausse 9 comporte au moins une nervure de rigidification périphérique 18,19.

Egalement, chaque rehausse 9, associée à un moule 4, est pourvue de pattes latérales 20 destinées à leur suspension à la structure de moulage 3, disposées de part et d'autre de la rehausse 9.

De ce fait, la rehausse est mobile et indépendante de la structure qui la supporte. De cette manière, en cas d'obstacle à la descente de la rehausse (moule en position décentrée par exemple), celle-ci se déplace de son support, le détecteur commande l'arrêt de la descente et le matériel n'est pas détérioré.

D'une manière globale, le carrousel constituant la structure de moulage 3 est constitué par :
- un bâti fixe 21, posé au sol, globalement quadrangulaire, à l'intérieur duquel s'inscrit, à sa partie inférieure,
- un plateau rotatif 22 sur lequel sont disposés les moules 4 et qui est susceptible d'être entrainé en rotation par un moteur 23, afin de diriger ceux-ci en direction du poste de transfert 5,
- une structure porteuse 24, mobile en translation ascendante ou descendante par rapport au bâti 24, sur laquelle sont disposées les rehausses 9 au regard des moules 4, en place sur le plateau rotatif 22, à l'arrêt.

Plus particulièrement, la structure porteuse 24, mobile en translation ascendante ou descendante, comprend un anneau support 25 relié à deux poutres horizontales 26,27 du bâti fixe 21, par quatre chaines ou câbles de suspension 28, susceptibles d'être actionnées en montée ou en descente pour agir sur l'anneau 25, et conséquemment sur les rehausses 9 par l'intermédiaire de bras supports 29, interposés radialement entre ces dernières et l'anneau 25.

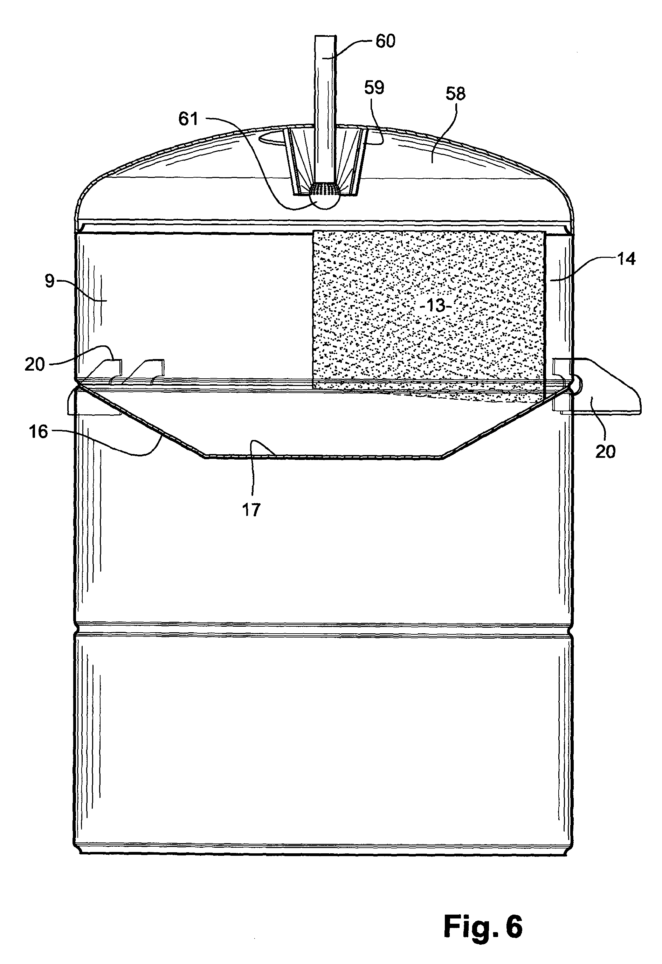

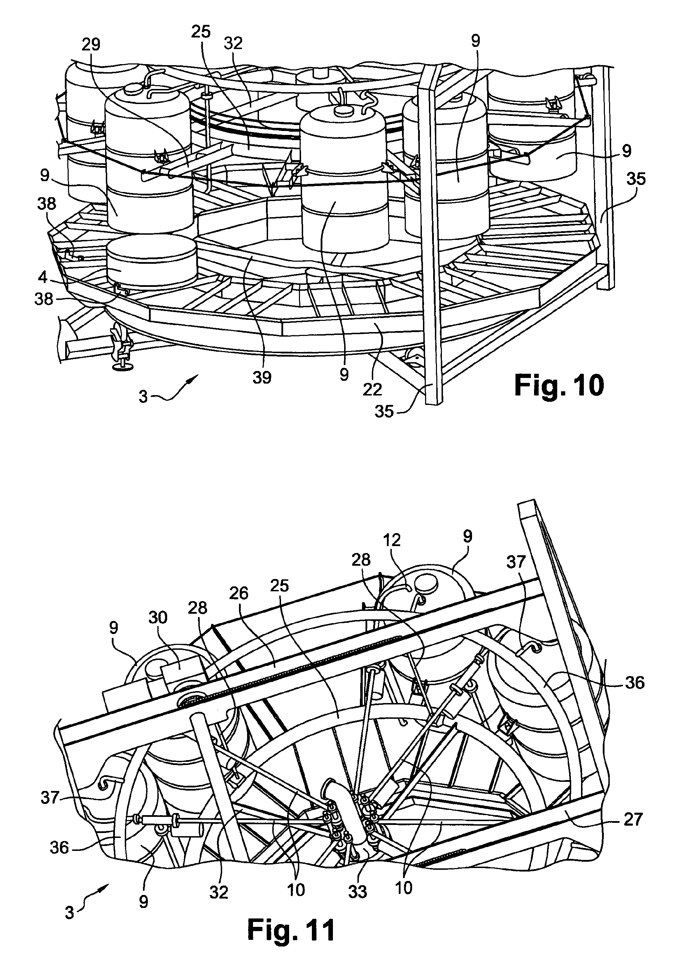

Comme on le voit particulièrement bien sur les figures 6 et 10, les chaines de suspension 28 de l'anneau support 25 et des bras 29 support de rehausses 9 sont actionnées par un moteur électrique 30 et une boite de pignons de renvoi d'angle 31.

Selon une autre caractéristique de l'invention, la structure porteuse 24, mobile en translation ascendante ou descendante, comporte une autre série de bras radiaux 32 reliant l'anneau 25 à un répartiteur central 33 de mélange caillé-sérum, alimenté par le poste de formation 2 et le distribuant aux parties supérieures des rehausses 9, par l'intermédiaire de canalisations radiales constituant le circuit 10.

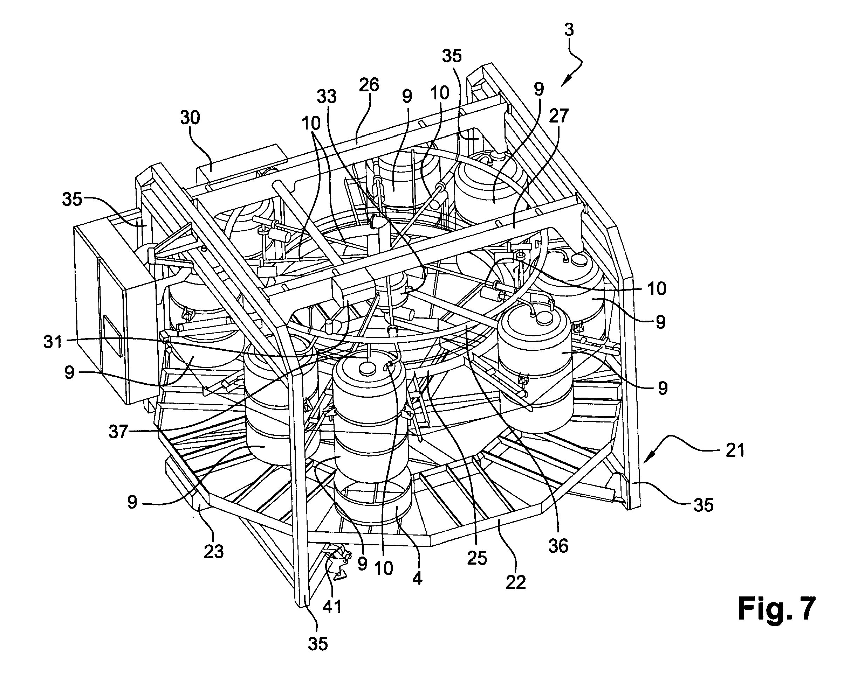

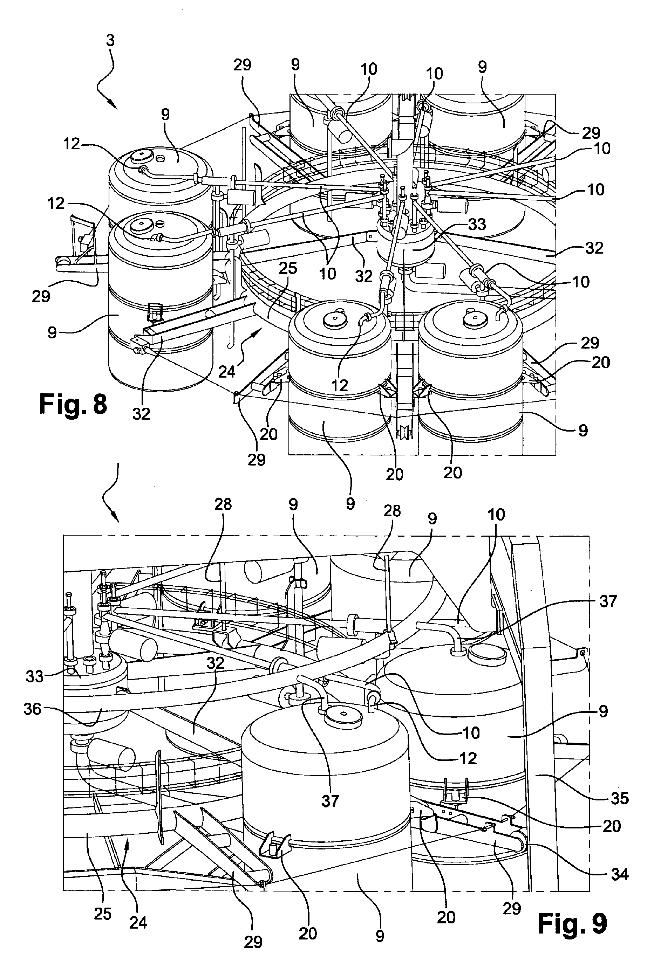

Comme bien visible sur les figures 7 et 8, les bras 29 support de rehausses 9 sont doublés, de manière à coopérer avec les pattes latérales 20, en vis-à-vis de deux rehausses 9 adjacentes, de tels bras 29 présentant, à leur extrémité libre, un galet de guidage 34 contre un montant correspondant 35 du bâti fixe 21.

Préférentiellement, les galets de guidage 34 forment une section en V, de manière à s'adapter sur l'angle 3 du montant 35 correspondant du bâti fixe.

Selon le présent exemple de réalisation, huit rehausses 9 sont accouplées deux à deux et entrainées dans un mouvement de translation ascendante et descendante par la structure porteuse mobile 24, de manière à couvrir ou découvrir le moule 4, selon qu'on se trouve en phase de moulage ou de démoulage.

Le carrousel constituant le poste de moulage comporte en outre un circuit de lavage après moulage, fixe par rapport au bâti 21, constitué par une canalisation circulaire 36 alimentée par une pompe, et de laquelle sont issus autant de dérivations 37 que de rehausses 9, qu'elles alimentent par l'intermédiaire de tubes plongeurs incorporés à la partie supérieure de chaque rehausse 9.

Ces tubes plongeurs (non représentés) sont solidaires de la canalisation circulaire 36, cette dernière étant elle-même solidaire du bâti 21, donc fixe par rapport à la structure porteuse 24 mobile en translation ascendante ou descendante supportant les rehausses 9. Ceci permet de laver l'intérieur de ladite rehausse dans sa globalité, lorsqu'elle monte et descend par rapport au tube plongeur fixe.

Selon un perfectionnement de cette caractéristique, chaque tube plongeur de lavage fixe comporte une boule diffusante d'eau, pour une aspersion interne de la rehausse 9.

La rehausse 9 comporte, à sa partie supérieure formant couvercle 58, un cône interne central 59 dans lequel plonge le tube 60 comportant la boule diffusante 61, de manière à distribuer la solution de lavage, tant à l'intérieur de la rehausse qu'à l'extérieur.

Ceci a pour avantage de diminuer considérablement le temps de nettoyage manuel.

Selon une autre caractéristique de l'invention du carrousel constituant la structure de moulage 3, le plateau rotatif 22 support de moules 4 constitue un bac de récupération du sérum en cours de moulage et comporte des éléments réglables de blocage 38 en position des moules 4.

Le plateau rotatif 22 comporte une canalisation basse 39 d'évacuation du sérum.

De plus, le plateau rotatif 22 comporte un rail circulaire inférieur 40, posant verticalement sur quatre roulettes 41 fixées au bâti 21, et un moteur 23 d'entrainement en rotation d'une roulette motrice 42, en appui sur une face latérale externe du rail 40, une seconde roulette libre 43 étant en appui sur la face interne opposée dudit rail 40.

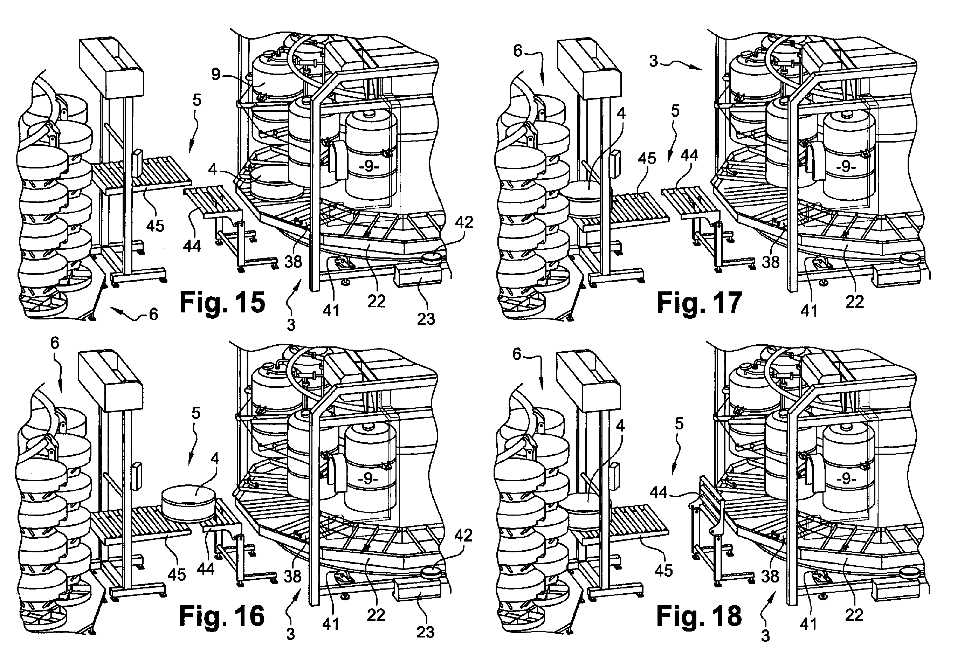

Comme bien visible sur les figures 1, 14, 15, 16 et 17, le poste de transfert 5 est constitué par un convoyeur 44, interposé entre le poste de moulage 3 et le poste de pressage 6, ledit convoyeur 44 étant rabattable pour permettre le passage d'un opérateur entre les deux postes, et susceptible d'être mis en coïncidence avec un palettiseur 45 étagé, programmé en fonction des différentes hauteurs des presses du poste de pressage.

Selon la forme de réalisation représentée, le transfert des moules 4, présentés automatiquement devant le convoyeur 44, vers le palettiseur 45, se fait manuellement par un opérateur. Mais bien entendu, ce transfert pourrait également être automatisé.

En ce qui concerne le poste de pressage 6, visible sur les figures 1, 12, 13, 14, 15, 16 et 17, celui-ci forme une tour, constituée par un mât central 46 soutenant un tube périphérique annulaire 47, par l'intermédiaire de bras radiaux 48 issus de l'extrémité du mât 46 d'une part, et de bras inclinés 49 issus d'une partie inférieure du mât 46 d'autre part, les deux types de bras 48,49 formant avec ce dernier autant de potences de soutènement du tube 47 ayant la double fonction, la première de supporter des colonnes étagées 50 de moules 4, chacun de ceux-ci étant associé à un dispositif de pressage constitué d'un plateau 7 et d'un vérin 8, et la seconde de constituer un conduit d'alimentation en air comprimé desdits vérins 8 associés aux plateaux de pressage 7.

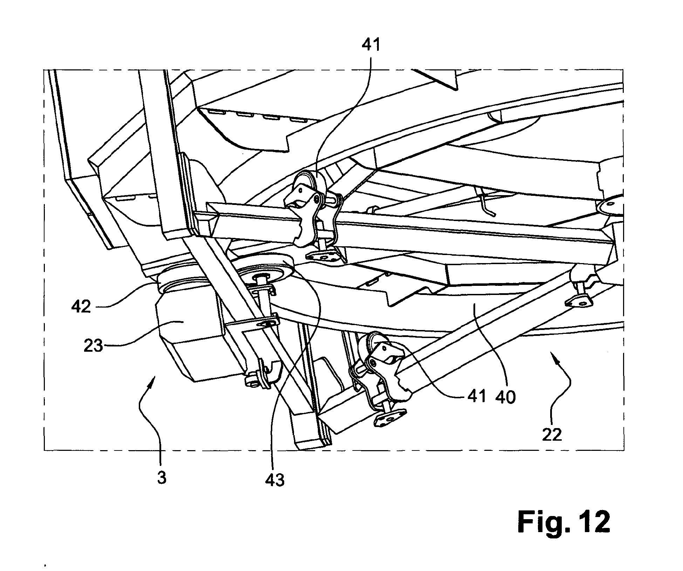

Comme le montre bien la figure 12, chaque colonne 50 de moules 4 est suspendue librement au tube périphérique 47 en deux points supérieurs, se prolongeant par deux montants latéraux 51,52 reliant entre eux les moules 4 à presser.

De plus, le tour de pressage 6 comporte, à sa partie inférieure, un bac circulaire 53 de récupération du sérum issu du pressage.

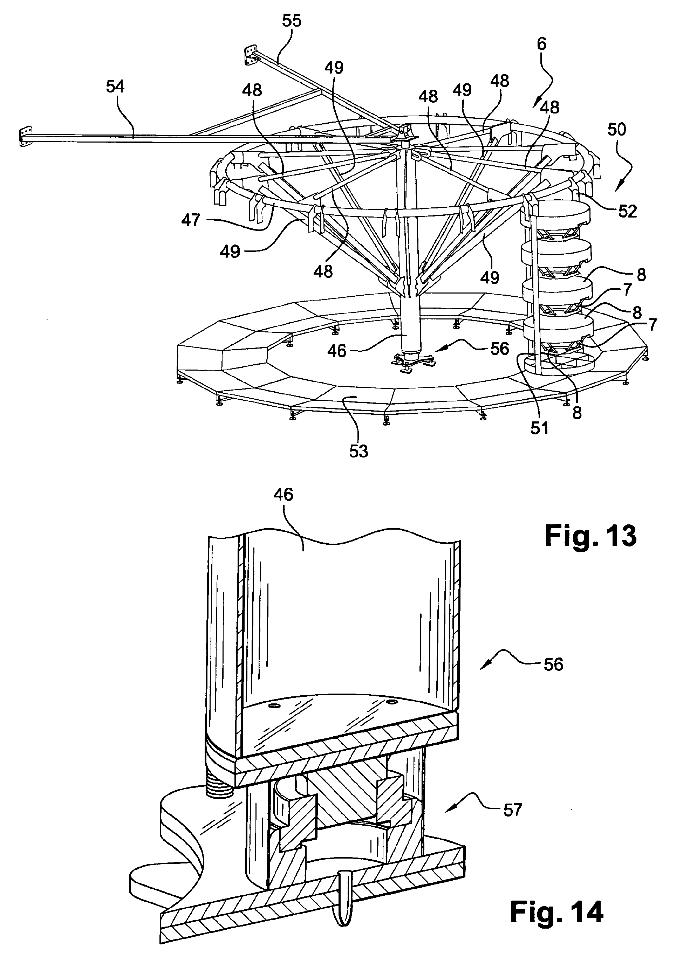

Comme le montre la figure 13, le centrage et le maintien du mât central 46 s'effectue d'une part à sa partie supérieure, par l'intermédiaire de tirants 54,55 de maintien solidaire d'une cloison, et d'autre part à sa partie inférieure, par un socle 56 muni d'un roulement à rouleaux coniques 57.

Préférentiellement, étant donné la spécificité des produits traités par l'installation qui vient d'être décrite, toutes les pièces métalliques sont en acier inoxydable, répondant aux normes alimentaires.

## Revendications

1. Installation (1) dans le domaine de l'agroalimentaire, notamment pour la fabrication du fromage, comportant .
- un poste de formation (2) d'un caillé à partir de lait et de présure, à transférer avec le sérum ainsi généré, vers
- un poste de moulage (3) dans lequel le caillé est disposé dans un moule (4) dont les parois sont perforées, pour être séparé du sérum, afin de former un pain de caillé,
- un poste de transfert (5) du pain de caillé du poste de moulage (3) vers
- un poste de pressage (6) dans lequel sont entreposés les moules de caillé (4), pour être soumis individuellement à la pression d'un plateau (7), associé à un vérin (8) commandé en descente selon une vitesse prédéterminée, pour évacuer le sérum subsistant dans le caillé et obtenir un fromage non affiné,
- un poste d'affinage pendant une période et une température prédéterminées (non représenté), **caractérisée en ce que** le poste de moulage (3) est constitué par une structure métallique dans laquelle sont disposés une pluralité de moules (4) dont les parois sont perforées, surmontés de rehausse (9) alimentées à leur partie supérieure du mélange caillé-sérum, issu du poste de formation (2) de celui-ci, par l'intermédiaire d'un circuit (10) d'alimentation et de distribution dans chacune des rehausses (9), ladite structure étant statique pendant la phase de décantation du caillé, et animée en rotation ensuite, à la manière d'un carrousel, après désolidarisation des rehausses (9) des moules (4) associés, pour diriger ces derniers, pas à pas, vers le poste de transfert (5), puis de pressage (6).

2. Installation selon la revendication 1, **caractérisée en ce que** la partie supérieure des rehausses (9) des moules (4), recevant le mélange caillé-sérum, forme une collerette périphérique (11) dans laquelle a été ménagé un premier orifice (12) d'alimentation du mélange arrivant sous pression depuis le poste de formation (2), pour être projeté tangentiellement contre la paroi interne de la collerette (11), afin de lui impliquer un mouvement circulaire en direction d'une grille de filtration (13) doublant partiellement la collerette (11), et délimitant avec celle-ci un espace (14) destiné à pré-décanter le caillé en recueillant le sérum du côté interne du filtre (13), dans cet espace (14) pourvu d'un orifice d'évacuation (15), le caillé arrêté du côté externe du filtre (13) tombant par gravité dans le moule (4) dont les parois sont perforées, situé à la base de la rehausse (9).

3. Installation selon la revendication 2, **caractérisée en ce que** la collerette périphérique (11) et sa grille (13) de filtration sont associées à un tronc de cône (16) dont la grande base (B) se confond avec la collerette (11), et dont la paroi tronconique recueille le caillé pour le diriger vers une ouverture centrale (17) constituant la petite base (b) du cône (16), pour assurer sa concentration et son déversement au centre du moule (4), de manière à obtenir une bonne répartition et la formation d'un pain de caillé en dôme.

4. Installation selon l'une des revendications 2 ou 3, **caractérisée en ce que** la rehausse (9) comporte au moins une nervure de rigidification périphérique (18, 19).

5. Installation selon l'une des revendications 1 à 4, **caractérisée en ce que** chaque rehausse (9), associée à un moule (4), est pourvue de pattes latérales (20) destinées à leur suspension à la structure de moulage (3), disposées de part et d'autre de la rehausse (9), rendant celle-ci mobile et indépendante de la structure qui la supporte.

6. Installation selon l'une des revendications 1 à 5, **caractérisée en ce que** le carrousel constituant la structure de moulage (3) est constitué par :
- un bâti fixe (21), posé au sol, globalement quadrangulaire, à l'intérieur duquel s'inscrit, à sa partie inférieure,
- un plateau rotatif (22) sur lequel sont disposés les moules (4) et qui est susceptible d'être entrainé en rotation par un moteur (23), afin de diriger ceux-ci en direction du poste de transfert (5),
- une structure porteuse (24), mobile en translation ascendante ou descendante par rapport au bâti (24), sur laquelle sont disposées les rehausses (9) au regard des moules (4), en place sur le plateau rotatif (22), à l'arrêt.

7. Installation selon la revendication 6, **caractérisée en ce que** la structure porteuse (24), mobile en translation ascendante ou descendante, comprend un anneau support (25) relié à deux poutres horizontales (26,27) du bâti fixe (21), par quatre chaines ou câbles de suspension (28), susceptibles d'être actionnées en montée ou en descente pour agir sur l'anneau (25), et conséquemment sur les rehausses (9) par l'intermédiaire de bras supports (29), interposés radialement entre ces dernières et l'anneau (25).

8. Installation selon la revendication 7, **caractérisée en ce que** les chaines de suspension (28) de l'anneau support (25) et des bras (29) support de rehausses (9) sont actionnées par un moteur électrique (30) et une boite de pignons de renvoi d'angle (31).

9. Installation selon l'une des revendications 6 à 8, **caractérisée en ce que** la structure porteuse (24), mobile en translation ascendante ou descendante, comporte une autre série de bras radiaux (32) reliant l'anneau (25) à un répartiteur central (33) de mélange caillé-sérum, alimenté par le poste de formation (2) et le distribuant aux parties supérieures des rehausses (9), par l'intermédiaire de canalisations radiales constituant le circuit (10).

10. Installation selon l'une des revendications 7 à 9, **caractérisée en ce que** les bras (29) support de rehausses (9) sont doublés, de manière à coopérer avec les pattes latérales (20), en vis-à-vis de deux rehausses (9) adjacentes, de tels bras (29) présentant, à leur extrémité libre, un galet de guidage (34) contre un montant correspondant (35) du bâti fixe (21).

11. Installation selon l'une des revendications 5 à 10, **caractérisée en ce qu'**il comprend un circuit de lavage après moulage, fixe par rapport au bâti (21), constitué par une canalisation circulaire (36) alimentée par une pompe, et de laquelle sont issus autant de dérivations (37) que de rehausses (9), qu'elles alimentent par l'intermédiaire de tubes plongeurs fixes (60) incorporés à la partie supérieure de chaque rehausse (9), animée pendant le nettoyage, d'un mouvement de va et vient, de haut en bas et de bas en haut, alors que le tube plongeur est fixe.

12. Installation selon la revendication 11, **caractérisée en ce que** chaque tube plongeur de lavage fixe (60) comporte une boule diffusante d'eau (61), pour une aspersion interne de la rehausse (9).

13. Installation selon l'une des revendications 11 et 12, **caractérisée en ce que** la rehausse (9) comporte, à sa partie supérieure formant couvercle (58), un cône interne central (59) dans lequel plonge le tube (60) comportant la boule diffusante (61), de manière à distribuer la solution de lavage, tant à l'intérieur de la rehausse qu'à l'extérieur.

14. Installation selon l'une des revendications 6 à 13, **caractérisée en ce que** le plateau rotatif (22) support de moules (4) constitue un bac de récupération du sérum en cours de moulage et comporte des éléments réglables de blocage (38) en position des moules (4).

15. Installation selon l'une des revendications 6 à 14, **caractérisée en ce que** le plateau rotatif (22) comporte une canalisation basse (39) d'évacuation du sérum.

16. Installation selon l'une des revendications 6 à 15, **caractérisée en ce que** le plateau rotatif (22) comporte un rail circulaire inférieur (40), posant verticalement sur quatre roulettes (41) fixées au bâti (21), et un moteur (23) d'entrainement en rotation d'une roulette motrice (42), en appui sur une face latérale externe du rail (40), une seconde roulette libre (43) étant en appui sur la face interne opposée dudit rail (40).

17. Installation selon la revendication 1, **caractérisée en ce que** le poste de transfert (5) est constitué par un convoyeur (44), interposé entre le poste de moulage (3) et le poste de pressage (6), ledit convoyeur (44) étant rabattable pour permettre le passage d'un opérateur entre les deux postes, et susceptible d'être mis en coïncidence avec un palettiseur (45) étagé, programmé en fonction des différentes hauteurs des presses du poste de pressage.

18. Installation selon l'une des revendications 1 à 17, **caractérisée en ce que** le poste de pressage (6) forme une tour, constituée par un mât central (46) soutenant un tube périphérique annulaire (47), par l'intermédiaire de bras radiaux (48) issus de l'extrémité du mât (46) d'une part, et de bras inclinés (49) issus d'une partie inférieure du mât (46) d'autre part, les deux types de bras (48,49) formant avec ce dernier autant de potences de soutènement du tube (47) ayant la double fonction, la première de supporter des colonnes étagées (50) de moules (4), chacun de ceux-ci étant associé à un dispositif de pressage constitué d'un plateau (7) et d'un vérin (8), et la seconde de constituer un conduit d'alimentation en air comprimé desdits vérins (8) associés aux plateaux de pressage (7).

19. Installation selon la revendication 18, **caractérisée en ce que** chaque colonne (50) de moules (4) est suspendue librement au tube périphérique (47) en deux points supérieurs, se prolongeant par deux montants latéraux (51,52) reliant entre eux les moules (4) à presser.

20. Installation selon l'une des revendications 18 ou 19, **caractérisée en ce que** le tour de pressage (6) comporte, à sa partie inférieure, un bac circulaire (53) de récupération du sérum issu du pressage.

21. Installation selon l'une des revendications 18 à 20, **caractérisée en ce que** le centrage et le maintien du mât central (46) s'effectue d'une part à sa partie supérieure, par l'intermédiaire de tirants (54,55) de maintien solidaire d'une cloison, et d'autre part à sa partie inférieure, par un socle (56) muni d'un roulement à rouleaux coniques (57).

## Claims

1. Food processing facility (1), particularly for manufacturing cheese, comprising:
- a station (2) for forming a curd from milk and rennet, to be transferred with the whey produced, to
- a moulding station (3) wherein the curd is placed in a mould (4) with perforated walls, to be separated from the whey, so as to form a curd block,
- a station (5) for transferring the curd block from the moulding station (3) to
- a pressing station (6) containing curd moulds (4), to be individually subjected to the pressure of a plate (7) associated with a cylinder (8) controlled for lowering at a predetermined rate, to discharge the whey remaining in the curd and obtain an unripened cheese,
- a ripening station for a predetermined period and temperature (not shown),
**characterised in that** the moulding station (3) consists of a metal structure wherein a plurality of moulds (4) with perforated walls are placed, topped with raising blocks (9) fed at the top thereof with the curd-whey mixture, from the station (2) for forming same, via a feed and distribution circuit (10) in each of the raising blocks (9), said structure being static for the curd settling phase, and subsequently rotated, similar to a turntable, after detaching the raising blocks (9) from the associated moulds (4), to route the moulds, step by step, to the transfer station (5) and pressing station (6).

2. Facility according to claim 1, **characterised in that** the top of the raising blocks (9) of the moulds (4), receiving the curd-whey mixture, forms a peripheral collar (11) wherein a first orifice (12) for feeding the incoming pressed mixture from the forming station (2) has been provided, to be projected tangentially against the inner wall of the collar (11), so as to impart a circular movement in the direction of a filtering screen (13) partially lining the collar (11) and defining a space (14) therewith to pre-settle the curd while collecting the whey inside the filter (13), in this space (14) provided with a discharge orifice (15), the curd stopped outside the filter (13) falling gravitationally into the mould (4) with perforated walls, situated at the base of the raising block (9).

3. Facility according to claim 2, **characterised in that** the peripheral collar (11) and the filtering screen (13) thereof are associated with a conical frustum (16) wherein the large base (B) merges with the collar (11), and wherein the truncated wall collects the curd for routing to a central opening (17) forming the small base (b) of the cone (16), to be concentrated and poured into the centre of the mould (4), so as to obtain a good distribution and the formation of a domed curd block.

4. Facility according to any of claims 2 or 3, **characterised in that** the raising block (9) comprises at least one peripheral stiffening rib (18, 19).

5. Facility according to any of claims 1 to 4, **characterised in that** each raising block (9), associated with a mould (4), is provided with lateral tabs (20) for suspending same on the moulding structure (3), arranged on either side of the raising block (9), rendering the block movable and independent from the supporting structure.

6. Facility according to any of claims 1 to 5, **characterised in that** the turntable forming the moulding structure (3) consists of:
- a fixed frame (21), which is placed on the ground and is overall quadrangular, and inside which is fitted, at the bottom thereof,
- a rotary table (22) whereon the moulds (4) are placed and which is suitable for being rotated by a motor (23), so as to route same towards the transfer station (5),
- a bearing structure (24), suitable for moving up or down with respect to the frame (24), whereon the raising blocks (9) are placed facing the moulds (4), in position on the rotary table (22), when not in operation.

7. Facility according to claim 6, **characterised in that** the bearing structure (24), suitable for moving up or down, comprises a support ring (25) connected to two horizontal beams (26, 27) of the fixed frame (21), by four suspension chains or cables (28), suitable for being actuated up or down to adjust the ring (25), and consequently the raising blocks (9) via support arms (29), radially inserted between the raising blocks and the ring (25).

8. Facility according to claim 7, **characterised in that** the suspension chains (28) of the support ring (25) and the support arms (29) of the raising blocks (9) are actuated by an electric motor (30) and a bevel gearbox (31).

9. Facility according to any of claims 6 to 8, **characterised in that** the bearing structure (24), suitable for moving up or down, comprises a further series of radial arms (32) connecting the ring (25) to a central distributor (33) of curd-whey mixture, fed by the forming station (2) and distributing same to the tops of the raising blocks (9), via radial pipes forming the circuit (10).

10. Facility according to any of claims 7 to 9, **characterised in that** the support arms (29) of the raising blocks (9) are lined, so as to engage with the lateral tabs (20), facing two adjacent raising blocks (9), such arms (29) having, at the free end thereof, a guiding roller (34) against a corresponding column (35) of the fixed frame (21).

11. Facility according to any of claims 5 or 10, **characterised in that** it comprises a circuit for washing after moulding, which is stationary with respect to the frame (21), consisting of a circular pipe (36) fed by a pump, and from which an equal number of branch circuits (37) and raising blocks (9) originate, fed via fixed plunger tubes (60) incorporated into the top of each raising block (9), actuated during cleaning, by a to and fro movement, downward and upward, whereas the plunger tube is stationary.

12. Facility according to claim 11, **characterised in that** each fixed washing plunger tube (60) comprises a water diffusing ball (61), for spraying inside the raising block (9).

13. Facility according to any of claims 11 and 12, **characterised in that** the raising block (9) comprises, at the top thereof acting as a cover (58), a central inner cone (59) wherein the tube (60) comprising the diffusing ball (61) plunges, so as to distribute the washing solution, both inside and outside the raising block.

14. Facility according to any of claims 6 to 13, **characterised in that** the rotary table (22) supporting the moulds (4) forms a whey collection tray during moulding and comprises adjustable elements (38) for locking the moulds (4) in position.

15. Facility according to any of claims 6 to 14, **characterised in that** the rotary table (22) comprises a low pipe (39) for discharging the whey.

16. Facility according to any of claims 6 to 15, **characterised in that** the rotary table (22) comprises a lower circular rail (40) positioned vertically on four castor wheels (41) attached to the frame (21), and a motor (23) for rotating a driving castor wheel (42), bearing on an external lateral face of the rail (40), a second free castor wheel (43) bearing on the inner face opposite said rail (40).

17. Facility according to claim 1, **characterised in that** the transfer station (5) consists of a conveyor (44), inserted between the moulding station (3) and the pressing station (6), said conveyor (44) being suitable for being folded to enable an operator to pass between the two stations, and suitable for being aligned with a staged pallet loader (45), programmed according to the various pressing station press heights.

18. Facility according to any of claims 1 to 17, **characterised in that** the pressing station (6) forms a tower, consisting of a central mast (46) supporting an annular peripheral tube (47), via radial arms (48) from the end of the mast (46) and inclined arms (49) from a lower part of the mast (46), both types of arms (48, 49) forming therewith beams for supporting the tube (47) having the dual role, the first being that of supporting staged columns (50) of moulds (4), each thereof being associated with a pressing device consisting of a table (7) and a cylinder (8), and the second being that of forming a conduit for supplying said cylinders (8) associated with the pressing plates (7) with compressed air.

19. Facility according to claim 18, **characterised in that** each column (50) of moulds (4) is suspended freely on the peripheral tube (47) at two upper points, extending via two lateral struts (51, 52) interconnecting the moulds (4) to be pressed.

20. Facility according to any of claims 18 or 19, **characterised in that** the pressing tower (6) comprises, at the bottom thereof, a circular tray (53) for collecting the whey from pressing.

21. Facility according to any of claims 18 to 20, **characterised in that** the central mast (46) is centred and secured at the top thereof, via tie rods (54, 55) for rigidly connecting a partition and, at the bottom thereof, by a base (56) provided with a conical roller bearing (57).

## Patentansprüche

1. Anlage (1) auf dem Gebiet der Nahrungsmittelindustrie, insbesondere für die Herstellung von Käse, umfassend:
- eine Vorrichtung zur Bildung (2) eines Käsebruchs aus Milch und Lab, zur Übertragung mit dem so gebildetem Serum an
- eine Formgebungsvorrichtung (3), in der der Käsebruch in eine Form (4) gegeben wird, deren Wände perforiert sind, um vom Serum getrennt zu werden, um einen Käsebruchkuchen zu bilden
- eine Vorrichtung zur Übertragung (5) des Käsebruchkuchens von der Formgebungsvorrichtung (3) an
- eine Pressvorrichtung (6), in der die Käsebruchformen (4) gelagert sind, um einzeln dem Druck einer Platte (7) ausgesetzt zu werden, assoziiert mit einer Spannvorrichtung (8), die gemäß einer vorbestimmten Geschwindigkeit nach unten gesteuert wird, um das Serum, das noch im Käsebruch vorhanden ist, abzuleiten und einen nicht gereiften Käse zu erhalten,
- eine Vorrichtung zur Reifung während eines Zeitraums und bei einer vorbestimmten Temperatur (nicht dargestellt).
**dadurch gekennzeichnet, dass** die Formgebungsvorrichtung (3) aus einer metallischen Struktur besteht, in der eine Vielzahl von Formen (4) angeordnet ist, deren Wände perforiert sind, überragt von einem Aufsatz (9), ihrerseits im oberen Teil mit der Mischung aus Käsebruch und Serum versorgt, die aus der Bildungsvorrichtung (2) dieser ausgeht, mit Hilfe eines Kreislaufs (10) zur Versorgung und Verteilung in jedem der Aufsätze (9), wobei die Struktur während der Phase der Absetzung des Käsebruchs statisch ist und dann, nach der Trennung der Aufsätze (9) der assoziierten Formen (4) nach Art eines Karussells zur Drehung gebracht wird, um diese Letzteren Schritt für Schritt auf die Übertragungs- (5), dann die Pressvorrichtung (6) zu führen.

2. Vorrichtung nach Anspruch 1, **dadurch gekennzeichnet, dass** der obere Teil der Aufsätze (9) der Formen (4), der die Mischung aus Käsebruch und Serum aufnimmt, einen peripheren Kragen (11) bildet, in dem eine erste Öffnung (12) zur Versorgung mit der Mischung angeordnet ist, die unter dem Druck aus der Bildungsvorrichtung (2) ankommt, um tangentiell gegen die Innenwand des Kragens (11) projiziert zu werden, um ihn in eine Kreisbewegung in Richtung eine Filtergitters (13) zu versetzen, das teilweise den Kragen (11) verdoppelt, und mit diesem einen Raum (14) begrenzt, der dazu ausgelegt ist, den Käsebruch im Voraus abzusetzen, indem das Serum der Innenseite des Filters (13) gesammelt wird, wobei in diesem Raum (14), der mit einer Öffnung zur Ableitung (15) ausgestattet ist, der Käsebruch, der von der Außenseite des Filters (13) aufgehalten wird, durch die Schwerkraft in die Form (4) fällt, deren Wände perforiert sind, die sich an der Basis des Aufsatzes (9) befindet.

3. Vorrichtung nach Anspruch 2, **dadurch gekennzeichnet, dass** der periphere Kragen (11) und sein Filterrost (13) mit einem Kegelstumpf (16) assoziiert sind, dessen große Basis (B) mit dem Kragen (11) verschmilzt, und dessen konische Wand den Bruch sammelt, um ihn auf eine zentrale Öffnung (17) zu führen, die die kleine Basis (b) des Kegels (16) bildet, um seine Konzentration und sein Abfließen im Zentrum des Form (4) sicherzustellen, um eine gute Verteilung und die Bildung eines Käseruchkuchens in Form einer Kuppel zu erhalten.

4. Vorrichtung nach einem der Ansprüche 2 oder 3, **dadurch gekennzeichnet, dass** der Aufsatz (9) mindestens eine periphere Versteifungsrippe (18, 19) umfasst.

5. Vorrichtung nach einem der Ansprüche 1 bis 4, **dadurch gekennzeichnet, dass** jeder Aufsatz (9), der mit einer Form (4) assoziiert ist, mit seitlichen Füssen (20) versehen ist, die dazu ausgelegt sind, an der Formgebungsstruktur (3) aufgehängt zu sein, die auf beiden Seiten des Aufsatzes (9) angebracht ist, und diese beweglich und von der Struktur, die sie trägt, unabhängig macht.

6. Anlage nach einem der Ansprüche 1 bis 5, **dadurch gekennzeichnet, dass** das Karussell, das die Formgebungsstruktur (3) bildet, aus Folgendem besteht:
- einem festen Rahmen (21), der auf den Boden gestellt ist, im Allgemeinen viereckig, in dessen Inneren, in seinem unteren Teil, Folgendes angeordnet ist:
- eine Drehplatte (22), auf der die Formen (4) angeordnet sind, und die durch einen Motor (23) zum Drehen gebracht werden kann, um diese in die Richtung der Übertragungsvorrichtung (5) führen zu können,
- eine Tragestruktur (24), die mit Bezug auf den Rahmen (24) in aufsteigender oder absteigender Translation beweglich ist, auf der die Aufsätze (9) mit Bezug auf die Formen (4) auf der Drehplatte (22) angeordnet sind.

7. Vorrichtung nach Anspruch 6, **dadurch gekennzeichnet, dass** die Tragestruktur (24), in aufsteigender oder absteigender Translation beweglich, einen Tragering (25) umfasst, der mit zwei horizontalen Trägern (26, 27) des festen Rahmens (21) durch vier Aufhängeketten oder -Kabel (28) verbunden ist, die nach oben oder nach unten bewegt werden können, um auf den Ring (25) und folglich auf die Aufsätze (9) mit Hilfe von Tragearmen (29) einzuwirken, die radial zwischen diesen Letzteren und dem Ring (25) angeordnet sind.

8. Vorrichtung nach Anspruch 7, **dadurch gekennzeichnet, dass** die Aufhängeketten (28) des Tragerings (25) und der Tragearme (29) der Aufsätze (9) durch einen elektrischen Motor (30) und einen Ritzelbehälter mit Eckumlenkung (31) betätigt werden.

9. Anlage nach einem der Ansprüche 6 bis 8, **dadurch gekennzeichnet, dass** die Tragestruktur (24), in aufsteigender oder absteigender Translation beweglich, eine weitere Reihe von radialen Armen (32) umfasst, die den Ring (25) mit einem zentralen Verteiler (33) der Mischung aus Käsebruch und Serum verbinden, versorgt durch eine Bildungsvorrichtung (2) und die sie an die oberen Teile der Aufsätze (9) mit Hilfe von radialen Leitungen verteilt, die den Kreislauf (10) bilden.

10. Anlage nach einem der Ansprüche 7 bis 9, **dadurch gekennzeichnet, dass** die Tragearme (29) der Aufsätze (9) verdoppelt sind, um mit den seitlichen Füssen (20), gegenüber zwei benachbarten Aufsätzen (9), zusammenzuarbeiten, wobei derartige Arme (29), an ihrem freien Ende, eine Führungsrolle (34) gegen einen entsprechenden Pfosten (35) des festen Rahmens (21) aufweisen.

11. Anlage nach einem der Ansprüche 5 bis 10, **dadurch gekennzeichnet, dass** sie einen Kreislauf zur Waschung nach der Formgebung aufweist, der mit Bezug auf den Rahmen (21) fest ist, bestehend aus einer kreisförmigen Leitung (36), die von einer Pumpe versorgt wird, und von der ebenso viele Ableitungen (37) wie Aufsätze (9) ausgehen, die sie mit Hilfe von festen Tauchgießrohren (60) versorgen, die am oberen Teil jedes Aufsatzes (9) eingebaut sind, die während der Reinigung in eine Hin- und Her-, Oben- nach Unten- und Unten- nach Oben-Bewegung versetzt werden, während das Tauchgießrohr fest ist.

12. Vorrichtung nach Anspruch 11, **dadurch gekennzeichnet, dass** jedes feste Waschtauchgießrohr (60) eine Wasserzerstäubungskugel (61) für eine interne Sprühung des Aufsatzes (9) umfasst.

13. Anlage nach einem der Ansprüche 11 und 12, **dadurch gekennzeichnet, dass** der Aufsatz (9) in seinem oberen Teil, der einen Deckel (58) bildet, einen zentralen inneren Kegel (59) bildet, in den das Rohr (60), das die Diffusionskugel (61) umfasst, eintaucht, um die Waschlösung zu verteilen, sowohl im Inneren des Aufsatzes als auch auf deren Außenseite.

14. Anlage nach einem der Ansprüche 6 bis 13, **dadurch gekennzeichnet, dass** die Drehplatte (22), die die Formen (4) trägt, einen Behälter zum Sammeln des Serums im Laufe der Formgebung bildet und einstellbare Elemente zur Blockierung (38) der Formen (4) in ihrer Position umfasst.

15. Anlage nach einem der Ansprüche 6 bis 14, **dadurch gekennzeichnet, dass** die Drehplatte (22) eine untere Leitung (39) zur Ableitung des Serums umfasst.

16. Anlage nach einem der Ansprüche 6 bis 15, **dadurch gekennzeichnet, dass** die Drehplatte (22) eine untere ringförmige Schiene (40) umfasst, die vertikal auf vier Rollen (41) sitzt, die auf dem Rahmen (21) befestigt sind, und einen Motor (23), um eine Antriebsrolle (42) in Drehung zu versetzen, die auf einer äußeren Seitenfläche der Schiene (40) aufliegt, wobei eine zweite freie Rolle (43) auf der gegenüber liegenden inneren Seite der Schiene (40) aufliegt.

17. Vorrichtung nach Anspruch 1, **dadurch gekennzeichnet, dass** die Übertragungsvorrichtung (5) aus einem Förderer (44) besteht, der zwischen der Formgebungsvorrichtung (3) und der Pressvorrichtung (6) angeordnet ist, wobei der Förderer (44) umklappbar ist, um den Durchgang eines Bedieners zwischen den zwei Vorrichtungen zu ermöglichen, und mit einer Palettiermaschine (45) mit mehreren Ebenen in Einklang gebracht werden kann, die je nach den verschiedenen Höhen der Pressen der Pressvorrichtung programmiert ist.

18. Anlage nach einem der Ansprüche 1 bis 17, **dadurch gekennzeichnet, dass** die Pressvorrichtung (6) einen Turm bildet, der aus einem zentralen Masten (46) besteht, der ein ringförmiges peripheres Rohr (47) mit Hilfe von radialen Armen (48) trägt, die einerseits aus dem Ende des Masten (46) ausgehen, und aus geneigten Armen (49), die andererseits aus einem unteren Teil des Masten (46) ausgehen, wobei die zwei Arten von Armen (48, 49) mit diesem Letzteren ebenso viele Stützstreben des Rohrs (47) bilden, die eine doppelte Funktion aufweisen, die erste des Tragens der Säulen in mehreren Ebenen (50) von Formen (4), wobei jede dieser mit einer Pressvorrichtung assoziiert ist, die aus einer Platte (7) und einer Spannvorrichtung (8) besteht, und die zweite des Bildens einer Leitung zur Versorgung der Spannvorrichtungen (8) mit Druckluft, die mit den Pressplatten (7) assoziiert sind.

19. Vorrichtung nach Anspruch 18, **dadurch gekennzeichnet, dass** jede Säule (50) von Formen (4) frei an zwei oberen Punkten am peripheren Rohr (47) aufgehängt ist, durch zwei seitliche Pfosten (51, 52) verlängert, die zwischen sich die zu pressenden Formen (4) verbinden.

20. Vorrichtung nach einem der Ansprüche 18 oder 19, **dadurch gekennzeichnet, dass** der Pressturm (6) in seinem unteren Teil einen kreisförmigen Behälter (53) zum Sammeln des Serums, das aus der Pressung stammt, umfasst,

21. Anlage nach einem der Ansprüche 18 bis 20, **dadurch gekennzeichnet, dass** die Zentrierung und die Aufrechterhaltung des zentralen Masts (46) einerseits an seinem oberen Teil erfolgt, mit Hilfe von Zugstangen (54, 55) zur Aufrechterhaltung der festen Verbindung mit einer Zwischenwand, und andererseits an seinem untern Teil, durch einen Sockel (56), der mit einem Wälzlager mit konischen Rollen (57) ausgestattet ist.
